## Europäisches Patentamt
## European Patent Office
## Office européen des brevets

(11) Veröffentlichungsnummer: **0 080 648**
**B1**

(12) **EUROPÄISCHE PATENTSCHRIFT**

(45) Veröffentlichungstag der Patentschrift:
21.08.85

(21) Anmeldenummer: 82110585.5

(22) Anmeldetag: 16.11.82

(51) Int. Cl.⁴: **B 65 G 15/42**

(54) **Fördergurt mit abgewinkelten Mitnehmerleisten.**

(30) Priorität: 26.11.81 DE 8134455 U
18.06.82 DE 3222801

(43) Veröffentlichungstag der Anmeldung:
08.06.83 Patentblatt 83/23

(45) Bekanntmachung des Hinweises auf die Patenterteilung:
21.08.85 Patentblatt 85/34

(84) Benannte Vertragsstaaten:
AT BE CH DE FR GB IT LI NL SE

(56) Entgegenhaltungen:
FR - A - 1 444 059
FR - A - 2 437 359
US - A - 1 600 985
US - A - 2 122 036
US - A - 4 246 999

(73) Patentinhaber: **Conrad Scholtz AG, Am Stadtrand 55/59,
D-2000 Hamburg 70 (DE)**

(72) Erfinder: **Paelke, Jürgen, An der Este 13, D-2117 Tostedt
(DE)**

(74) Vertreter: **Lieck, Hans-Peter, Dipl.-Ing., Lieck & Betten
Patentanwälte Maximiliansplatz 10,
D-8000 München 2 (DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die Erfindung betrifft einen Fördergurt mit abgewinkelten Mitnehmerleisten für die Steil- und Senkrechtförderung von Schüttgut nach dem Oberbegriff des Anspruches 1.

Aus der FR-A-1 444 059 ist ein Fördergurt für Schüttgut mit seitlichen gewellten Randleisten (Wellenkanten) und Mitnehmerleisten zwischen diesen bekannt, die einen gleichförmig gekrümmten Querschnitt ohne Einlagen besitzen. Solche Mitnehmerleisten haben aufgrund ihrer Gestalt keine große Eigenstabilität, so daß ihre Höhe und/oder Tragfähigkeit sehr begrenzt ist. Außerdem stehen die an keiner Stelle ihres Querschnittes senkrecht zum Fördergurt, weshalb man sie auch nicht zur Erhöhung der Stabilität seitlich mit den Wellenkanten verbinden kann, ohne deren notwendige Streckung oder Stauchung an Ablenkstellen des Fördergurtes zu behindern. Jedenfalls für die Steil- und Senkrechtförderung hat dieser bekannte Fördergurt nie Eingang in der Praxis gefunden.

Ein demgegenüber in der Praxis brauchbarer, aus der FR-A-2 437 359 bekannter Fördergurt der eingangs genannten Art weist zwischen den Wellenkanten Mitnehmerleisten mit einem winkelförmigen Querschnitt auf, welche jeweils — im Querschnitt — aus zwei geraden Schenkeln gleicher Querschnitts-Länge zusammengesetzt sind. Von diesen steht ein unterer ungefähr senkrecht zum Fördergurt, während der zweite, obere Schenkel gegenüber dem ersten Schenkel so geneigt ist, daß er mit der Fördergurt-Ebene einen Winkel von 45°—55° einschließt. Die senkrecht zur Fördergurt-Ebene gemessene Höhe der Mitnehmerleisten entspricht etwa der Höhe der Wellenkanten. Der gegenseitige Längsabstand der Mitnehmerleisten soll etwa 85 bis 100% der Höhe der Wellenkanten betragen. Der Fördergurt wird so installiert, daß die geneigten, zweiten Schenkel der Mitnehmerleisten zwischen diesen umgrenzen einzelne »Kästen« für die Aufnahme des zu fördernden Schüttgutes. Normalerweise wird der Fördergurt in einem horizontal laufenden Abschnitt beschickt bzw. beladen. Im steilen oder senkrechten Förderstrecken-Abschnitt verhindern die zweiten, geneigten Schenkel der Mitnehmerleisten ein seitliches Herausfallen des Schüttgutes aus den »Kästen«. Die Förderkapazität des Fördergurtes hängt außer von der Fördergurt-Geschwindigkeit, die sich nicht beliebig steigern läßt, vom gegenseitigen Längsabstand der Mitnehmerleisten, also der Zahl der Mitnehmerleisten pro Längeneinheit des Fördergurtes, und von der Schüttgut-Menge ab, die jede einzelne Mitnehmerleiste — natürlich in Verbindung mit den seitlichen Wellenkanten — im steilen oder senkrechten Förderabschnitt zurückzuhalten in der Lage ist. Dem erläuterten Fördergurt mit seinen einfach abgewinkelten Mitnehmerleisten sind hier Grenzen gesetzt.

Der Erfindung liegt dementsprechend die Aufgabe zugrunde, einen gattungsgemäßen Fördergurt mit einfachen Mitteln so weiterzubilden, daß seine Förderkapazität noch weiter erhöht ist.

Diese Aufgabe ist erfindungsgemäß mit dem im Anspruch 1 gekennzeichneten Fördergurt gelöst.

Der erfindungsgemäße Fördergurt zeichnet sich durch im Querschnitt zweifach abgewinkelte Mitnehmerleisten unter Einhaltung einer bestimmten Querschnittsform aus, die durch Neigungswinkel und relative Länge der drei Schenkel jeder Mitnehmerleiste festgelegt ist. Hierdurch wird unmittelbar eine besonders große Förderkapazität des Fördergurtes erzielt: Jede Mitnehmerleiste für sich kann aufgrund ihrer Querschnittsgestalt im steilen oder senkrechten Förderabschnitt ein sehr hohes Schüttgut-Volumen fassen. Gleichzeitig kann der gegenseitige Längsabstand der Mitnehmerleisten auf dem Fördergurt gegenüber dem für den bekannten Fördergurt angegebenen Minimalwert noch verkleinert werden, ohne die Beladbarkeit des Fördergurtes im horizontalen Aufgabeabschnitt zu beeinträchtigen. Eine sehr ausgeprägte Neigung der Mitnehmerleisten in Aufwärtsrichtung würde an sich das Aufnahmevolumen jeder einzelnen Mitnehmerleiste vergrößern, gleichzeitig aber die Öffnungsweite der einzelnen »Kästen« in Fördergurt-Längsrichtung verkleinern und damit eine ausreichende Füllung der einzelnen Förderkästen im horizontalen Aufgabe-Abschnitt beeinträchtigen, was dann wieder durch eine Vergrößerung des Längsabstandes und damit eine Verringerung des Fördervolumens insgesamt kompensiert werden müßte. Beim erfindungsgemäßen Fördergurt ist mit den Mitnehmerleisten bestimmter Querschnittsgestalt ein vorzüglicher Kompromiß zwischen diesen beiden gegenläufigen Einflußgrößen auf die Förderkapazität verwirklicht. Für den angegebenen gegenseitigen Längsabstand der Mitnehmerleisten von 60 bis 100% ihrer senkrechten Höhe entspricht die Schüttgut-Menge, die auch bei den heutzutage üblich gewordenen, recht hohen Fördergurt-Geschwindigkeiten von zum Beispiel 3 ms$^{-1}$ noch beherrschbar in den Raum zwischen zwei aufeinanderfolgenden Mitnehmerleisten, also einen »Kasten«, eingebracht werden kann, in etwa dem Aufnahmevolumen der einzelnen Mitnehmerleiste im senkrechten Förderstreckenabschnitt. Im einzelnen hängt die Wahl des Längsabstandes natürlich von der Art des Schüttgutes, insbesondere seiner Korngröße und seinem Schüttwinkel ab. Bei hoher Korngröße, aber auch bei hohem Schüttwinkel — weil er eine höhere Aufnahmekapazität der einzelnen Mitnehmerleiste zur Folge hat — wird man den Längsabstand eher am oberen Ende des obigen Bereiches wählen.

Die Bauweise des erfindungsgemäßen Fördergurtes bewirkt aber auch mittelbar eine wesentlich verbesserte Förderleistung: Durch die zweifach abgewinkelte Querschnittsform haben die Mitnehmerleisten über ihre Länge eine vergleichsweise große Festigkeit, d. h., daß sie auch bei breiteren Fördergurten im Gegensatz zu den einfach abgewinkelten Mitnehmerleisten des bekannten Fördergurtes keine Neigung zum »Durchhängen« unter der Last des in der senkrechten Strecke getragenen Schüttgutes zeigen. Es ist also gewährleistet, daß das theoretische, durch die Geometrie vorgegebene Fördervolumen tatsächlich voll genutzt werden kann. In gleicher Richtung wirken die beiden voneinander beabstandeten, gemäß Anspruch 6 vorzugsweise aus Stahlcord bestehenden Einlagen. Auch wenn die Mitnehmerleisten eine große Höhe von z. B. 400 mm haben, verhindern diese Einlagen wirksam ein »Zurückbiegen« der Mitnehmerleisten im oberen, vom Fördergurt beabstandeten Bereich unter der Last des Schüttgutes und tragen dementsprechend ebenfalls dazu bei, daß die theoretisch vorgegebene Förderkapazität in der Praxis durch ungewollte Verformungen der Mitnehmerleisten nicht geschmälert wird.

Schließlich haben umfangreiche Versuche gezeigt, daß die Geometrie der Mitnehmerleisten noch in einer weiteren indirekten Weise wesentlichen Einfluß auf die tatsächlich erzielbare Förderleistung des Fördergurtes hat, und zwar durch Optimierung der Abgabe des geförderten Schüttgutes vom Fördergurt an der Abgabestelle. An dieser wird der Fördergurt bogenförmig umgelenkt, wobei das Schüttgut den Fördergurt unter Fliehkrafteinwirkung in radialer Richtung zu verlassen sucht. Bei dem erfindungsgemäßen Fördergurt ist durch die Geometrie der Mitnehmerleisten erreicht, daß der Schüttgut-Austritt einerseits nicht zu früh in unkontrollierter Weise beginnt und andererseits trotzdem relativ rasch, ohne wesentliche Behinderung durch die abgewinkelten Mitnehmerleisten erfolgen kann. Andere Formen der Mitnehmerleisten führen zu einer deutlichen Verschlechterung der Schüttgut-Abgabe, und zwar je nach Form bis zu einem Punkt, bei dem ein Teil des Schüttgutes an der Abgabestelle in den Fördergurt-Taschen verbleibt und erst im Rücktrum angestreut wird, was natürlich äußerst nachteilig ist. Der erfindungsgemäße Fördergurt wird demgegenüber auch bei einer zur Erzielung hoher Förderleistung hoch angesetzten Fördergurt-Geschwindigkeit noch sicher und sauber entleert.

Im Hinblick auf die Förderkapazität und Formstabilität bevorzugte relative Abmessungen der Mitnehmerleisten gehen aus den Unteransprüchen 2 und 3 hervor. Die Ausbildung nach Anspruch 4 verleiht den Mitnehmerleisten eine besonders hohe Formstabilität und verbessert gleichzeitig durch die Abrundungen die Materialabgabe an den Mitnehmerleisten. Durch die Verstärkungsrippen nach Anspruch 5 kann die Formstabilität noch weiter erhöht werden.

Im folgenden ist die Erfindung mit weiteren vorteilhaften Einzelheiten anhand eines schematisch dargestellten Ausführungsbeispiels näher erläutert. In den Zeichnungen zeigt

Fig. 1 eine isometrische Ansicht eines Ausschnittes aus einem Fördergurt für die Steil- und Senkrechtförderung von Schüttgut,

Fig. 2 einen Querschnitt durch den Fördergurt nach Fig. 1,

Fig. 3 einen Längsschnitt durch den Fördergurt nach Fig. 1.

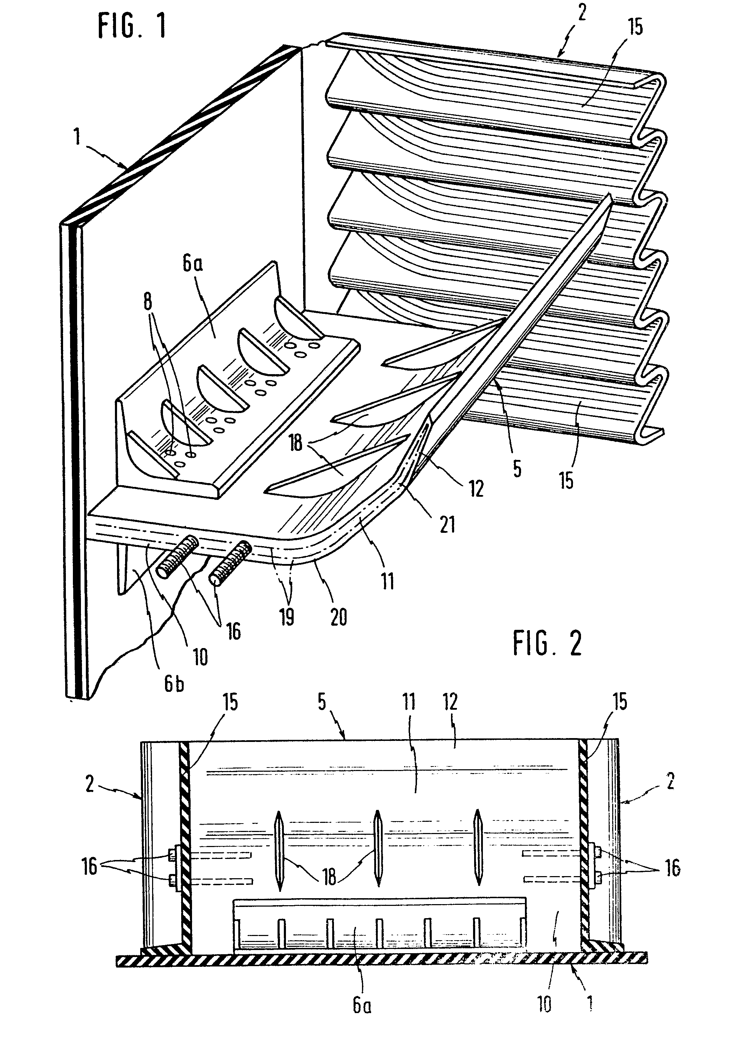

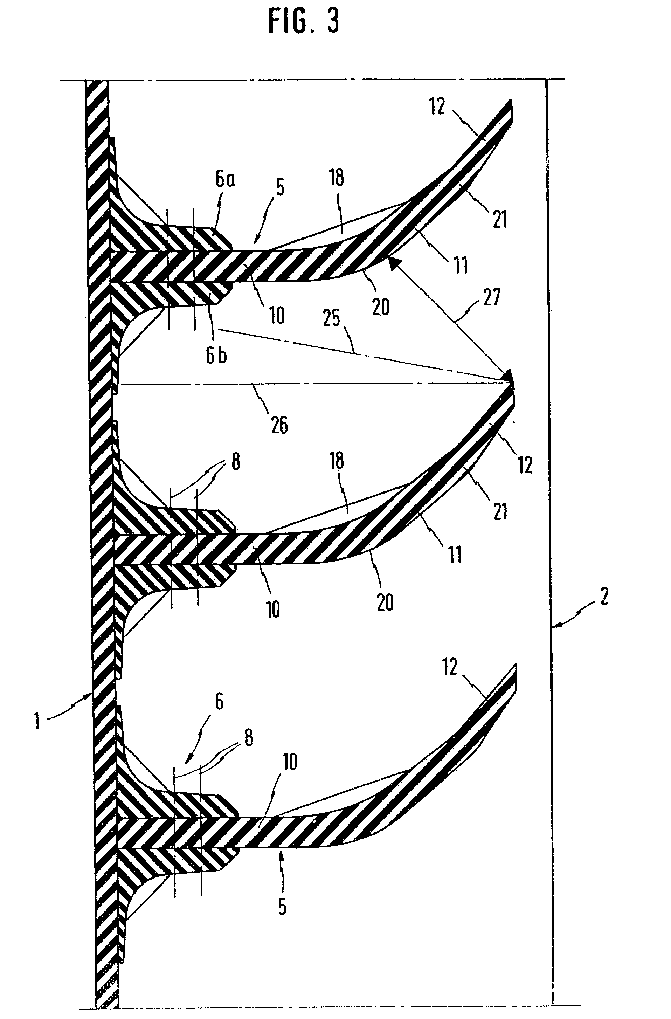

Gemäß Fig. 1 und 2 ist ein Fördergurt 1 aus Gummi oder dergleichen in üblicher Ausbildung an seinen beiden Rändern mit je einer gewellten Randleiste aus Gummi oder dergleichen, einer Wellenkante 2, besetzt, die ungefähr senkrecht wegstehen. In gleichen gegenseitigen Längsabständen sind auf dem Fördergurt, siehe Fig. 3, quer zur Fördergurtlängsrichtung ausgerichtete Mitnehmerleisten 5 aus Gummi oder dergleichen angebracht, die den Raum zwischen den Wellenkanten in einzelne Förderkästen unterteilen. Jede Mitnehmerleiste 5 besitzt einen breiten, ungefähr T-förmigen Fuß 6, der aus zwei winkelförmigen Fußleisten 6a und 6b besteht. Das Fußleisten-Paar 6a, 6b ist mit dem Fördergurt 1 durch Klebung fest verbunden. Die eigentlichen Mitnehmerleisten sind mit dem Fußleisten-Paar 6a, 6b mittels Schrauben 8 verbunden, so daß sie bei Bedarf ausgewechselt werden können.

Jede Mitnehmerleiste 5 hat einen zweifach abgewinkelten Querschnitt, der sich aus drei geraden Schenkeln 10, 11 und 12 zusammensetzt. Ein unterer, erster Schenkel 10 ist mit dem Fuß 6 verbunden und steht ungefähr senkrecht zur Ebene des Fördergurtes 1. Ein mittlerer, zweiter Schenkel 11 ist gegenüber dem ersten Schenkel in Fördergurtlängsrichtung geneigt und schließt mit der Fördergurt-Ebene einen Winkel von zirka 53° ein. Ein oberer, dritter Schenkel 12 ist noch stärker in der gleichen Richtung wie der zweite Schenkel geneigt und schließt mit der Fördergurt-Ebene einen Winkel von zirka 41° ein. Die im Querschnitt gemessenen Längen des zweiten und des dritten Schenkels 11 beziehungsweise 12 betragen ungefähr 57% beziehungsweise 35% der Länge des ersten Schenkels. Die senkrecht zwischen der Fördergurt-Ebene und dem freien Ende des dritten Schenkels 12 gemessene Höhe jeder Mitnehmerleiste ist ungefähr 8% kleiner als die Höhe der Wellenkanten 2, damit sich die Mitnehmerleisten unter Belastung etwas aufrichten können, ohne dabei über die Wellenkanten überzustehen.

Der gegenseitige Längsabstand der Mitnehmerleisten 5 beträgt ungefähr 68% ihrer Höhe. Typische Maße sind eine Wellenkanten-Höhe von 400 mm und ein gegenseitiger Längsabstand der Mitnehmerleisten 5 von zirka 250 mm.

Jede Mitnehmerleiste ist so auf dem eigentlichen Fördergurt 1 angeordnet, daß sie mit dem unteren, senkrechten Schenkel 10 genau zwischen zwei gegenüberliegenden, nach innen weisenden Scheiteln 15 der beiden Wellenkanten 2 steht. Sie ist an diesen Scheiteln 15 seitlich zusätzlich zu der Befestigung am Fuß 6 mittels Bolzen 16 befestigt, die im unteren Schenkel 10 der Mitnehmerleiste 5 verankert und an der Wellenkante verschraubt sind.

An jeder Mitnehmerleiste 5 sind drei, zur eigentlichen Mitnehmerleiste senkrechte Verstärkungsrippen 18 im stumpfen Winkel zwischen dem unteren, ersten Schenkel 10 und dem mittleren, zweiten Schenkel 11 ausgebildet, durch welche die Biegebelastbarkeit der Mitnehmerleisten 5 erhöht wird. Im gleichen Sinne wirken zwei flächige Einlagen 19 aus Stahlkord, die, bezogen auf den Querschnitt, mit gegenseitigem Abstand in jede Mitnehmerleiste eingebettet sind und vom unteren Schenkel 10 bis nahe dem freien Ende des oberen Schenkels 12 durchgehen.

An den Übergängen vom ersten zum zweiten und vom zweiten zum dritten Schenkel, weist jede Mitnehmerleiste 5 Abrundungen 20 beziehungsweise 21 auf. Außerdem haben die Mitnehmerleisten im Bereich der Abrundungen eine vergrößerte Wandstärke, was ebenfalls die Formstabilität deutlich verbessert.

Das theoretische Aufnahmevolumen jeder einzelnen Mitnehmerleiste ist der Fläche proportional, vergleiche Fig. 3, die von der Mitnehmerleiste und dem Fördergurt sowie der Linie 26 oder 26 umgrenzt wird, wobei die Linie 25 für Schüttgut mit einem Schüttwinkel von 10° und die Linie 26 für Schüttgut mit einem Schüttwinkel von 0° — beide bezogen auf senkrechte Förderung — gilt. Zwischen jeweils benachbarten Mitnehmerleisten existiert eine Befüllungsöffnung, deren Weite 27 die Beladbarkeit des Fördergurtes beziehungsweise seiner einzelnen Förderkästen bestimmt. Beim erfindungsgemäßen Fördergurt ist die Querschnittsgestalt beziehungsweise -form der Mitnehmerleisten so optimiert, daß sich einerseits ein hohes Aufnahmevolumen jeder Mitnehmerleiste ergibt, andererseits aber auch die Weite 27 der Befüllungsöffnung trotz relativ kleiner Längsabstände der Mitnehmerleisten ausreicht, das Aufnahmevolumen der Mitnehmerleisten durch entsprechende Befüllung voll nutzen zu können.

**Patentansprüche**

1. Fördergurt für die Steil- und Senkrechtförderung von Schüttgut, mit seitlich aufgesetzten Wellenkanten (2) und dazu quer ausgerichteten, in gleichen gegenseitigen Längsabständen angeordneten Mitnehmerleisten (5) aus elastomerem Werkstoff, die jeweils mit einem Fuß (6) am Fördergurt (1) und ggf. auch seitlich an den förderraumseitigen Scheiteln (15) der Wellenkanten (2) befestigt sind, und die im Querschnitt jeweils einen unteren, zur Fördergurt-Ebene ungefähr senkrechten, ersten geraden Schenkel (10) und einen daran anschließenden, gegenüber dem ersten Schenkel geneigten zweiten geraden Schenkel (11) umfassen, wobei der gegenseitige Längsabstand der Mitnehmerleisten (5) 60—100% ihrer senkrecht zwischen der Ebene des Fördergurtes (1) und dem freien Ende der Mitnehmerleisten (5) gemessenen Höhe beträgt, dadurch gekennzeichnet, daß sich an den zweiten Schenkel (11) jeder Mitnehmerleiste (5) ein dritter gerader Schenkel (12) anschließt, der im Querschnitt gegenüber dem zweiten Schenkel in der gleichen Richtung wie dieser gegenüber dem ersten Schenkel (10) geneigt ist und eine kleinere Länge als der zweite Schenkel hat, daß der zweite Schenkel mit der Ebene des Fördergurtes (1) einen Winkel im Bereich von 48°—58° und der dritte Schenkel mit der Ebene des Fördergurtes einen Winkel im Bereich von 35°—45° einschließt, daß die Länge des ersten Schenkels und die Länge des dritten Schenkels 23%—47% der Länge des ersten Schenkels beträgt, und daß in jede Mitnehmerleiste (5) zwei, im Querschnitt voneinander beabstandere flächige Versteifungs-Einlagen (19) eingebettet sind.

2. Fördergurt nach Anspruch 1, dadurch gekennzeichnet, daß die Länge des zweiten Schenkels (11) jeder Mitnehmerleiste (5) 52%—63%, vorzugsweise ca. 57% der Länge des ersten Schenkels (10) beträgt.

3. Fördergurt nach Anspruch 1, dadurch gekennzeichnet, daß die Länge des dritten Schenkels (12) jeder Mitnehmerleiste (5) 30%—40%, vorzugsweise ca. 35% der Länge des ersten Schenkels (40) beträgt.

4. Fördergurt nach einem der Ansprüche 1 bis 3, dadurch gekennzeichnet, daß jede Mitnehmerleiste (5) im Querschnitt an den Übergängen vom ersten zum zweiten Schenkel (11) und vom zweiten zum dritten Schenkel (12) je eine Abrundung (20) bzw. (21) aufweist und im Bereich der Abrundungen eine vergrößerte Wandstärke hat.

5. Fördergurt nach einem der Ansprüche 1 bis 4, dadurch gekennzeichnet, daß an jeder Mitnehmerleiste (5) im stumpfen Winkel zwischen dem ersten Schenkel (10) und dem zweiten Schenkel (11) mindestens eine Verstärkungsrippe (18) ausgebildet ist.

6. Fördergurt nach einem der Ansprüche 1 bis 5, dadurch gekennzeichnet, daß die Einlagen (19) als Stahlkord bestehen.

**Claims**

1. Conveyor belt for steep and vertical conveying of bulk materials, comprising laterally affixed undulant edges (2) and transversely lined up thereto and arranged at equal mutual longitudinal intervals entraining bars or cleats (5) of elastomeric material which are in each case secured via a base (5) to the conveyor belt (1) and if applicable laterally to the conveyor-space-side crests (15) of the undulant edges (2), and which in cross-section in each case have a first straight lower branch (10) approximately at right angles to the conveyor belt plane, and joined thereto a second straight branch (11) sloping with respect to the first branch, the mutual longitudinal spacing of the cleats (5) amounting to 60 to 100% of their height measured between the plane of the conveyor belt (1) and the free extremity of the cleats (5), characterised in that the second branches (11) of each cleat (5) are joined by a third straight branch (12) which in cross-section slopes with respect to the second branch in the same direction in which the same slopes with respect to the first branch (10) and has a shorter lenght than that of the second branch, that the second branch subtends an angle within the range from 48 to 58° with the plane of the conveyor belt (1) and the third branch subtends an angle within the range from 35 to 45° with the plane of the conveyor belt, that the length of the second branch amounts to 45% to 70% of the length of the first branch and the length of the third branch amounts to 23% to 47% of the length of the first branch, and that two areal reinforcing inserts (19) spaced apart from each other in cross-section are embedded in each cleat (5).

2. Coveyor belt according to claim 1, characterised in that the length of the second branch (11) of each cleat (5) amounts to 52% to 63% and preferably to about 57% of the length of the first branch (10).

3. Conveyor belt according to claim 1, characterised in that the length of the third branch (12) of each cleat (5) amounts to 30% to 40% and preferably to approximately 35% of the length of the first branch (40).

4. Conveyor belt according to one of the claims 1 to 3, characterised in that each cleat (5) has a rounded portion (20) and (21), respectively, at the transitions between the first and the second branch (11) and between the second and the third branch (12) and has an increased wall thickness in the areas of the rounded portions.

5. Conveyor belt according to one of the claims 1 to 4, characterised in that at least one reinforcing web (18) is formed in the obtuse angle between the first branch (10) and the second branch (11).

6. Conveyor belt according to one of the claims 1 to 5, characterised in that the inserts (19) consist of steel cord.

**Revendications**

1. Bande transporteuse pour transport vertical et en pente raide de matière en vrac, comportant des bordures ondulées (2) ménagées latéralement, et des pallettes d'entraînement (5) en matière élastomère, palettes qui sont dirigées transversalement aux bordures et agencées à intervalles longitudinaux mutuels, et sont fixées chacune par une semelle (6) à la bande transporteuse (1) et éventuellement aussi latéralement aux sommets (15) que présentent les bordures ondulées (2) du côté volume de transport, chaque palette présentant en section transversale une première partie rectiligne (10), inférieure, sensiblement perpendiculaire au plan de la bande transporteuse, et une deuxième partie rectiligne (11) se raccordant à la première par rapport à laquelle elle est inclinée, l'intervalle longitudinal mutuel des palettes d'entraînement (5) étant de 60% à 100% de leur hauteur mesurée perpendiculairmenet entre le plan de la bande transporteuse (1) et l'extrémité libre des palettes d'entraînement (5), caractérisée en ce qu'à la deuxième partie (11) de chaque palette d'entraînement (5) se raccorde une troisième partie rectiligne (12) qui, vue en coupe transversale, est inclinée par rapport à la deuxième partie, dans la même direction que cette dernière l'est par rapport à la première partie (10), et qui possède une plus faible longueur que la deuxième partie, en ce que la deuxième partie forme avec la plan de la bande transporteuse (1) un angle compris dans une plage de 48° à 58°, et la troisième partie forme avec le plan de la bande transporteuse un angle compris dans la plage de 35° à 45°, en ce que la longueur de la deuxième partie est de 45% à 70% de la longueur de la première partie, et la longueur de la troisième partie est de 23% à 47% de la longueur de la première partie, et en ce que deux inserts de raidissement en forme de nappe (19), écartés l'un de l'autre lorsqu'ils sonst vus en coupe transversale, sont noyés dans chaque palette d'entraînement (5).

2. Bande transporteuse selon la revendication 1, caractérisée en ce que la longueur de la deuxième partie (11) de chaque palette d'entraînement (5) est de 52% à 63%, de préférence d'environ 57%, de la longueur de la première partie (10).

3. Bande transporteuse selon la revendication 1, caractérisée en ce que la longueur de la troisième partie (12) de chaque palette d'entraînement (5) est de 30% à 40%, de préférence d'environ 35%, de la longueur de la première partie (40).

4. Bande transporteuse selon l'une des revendications 1 à 3, caractérisée en ce que chaque palette d'entraînement (5) présente, vue en coupe transversale, aux transitions de la première à la deuxième partie (11) et de la deuxième à la troisième partie (12), un arrondi (20, respectivement 21), et possède une épaisseur accrue dans la région de ces arrondis.

5. Bande transporteuse selon l'une des revendications 1 à 4, caractérisée en ce qu'au moins une nervure de renforcement (18) est formée sur chaque palette d'entraînement (5), dans l'angle obtus compris entre la première partie (10) et la deuxième partie (11).

6. Bande transporteuse selon l'une quelconque des revendications 1 à 5, caractérisée en ce que les inserts (19) sont en fil d'acier.

FIG. 1

FIG. 2

# FIG. 3